# FASCICULE DE BREVET EUROPEEN

(11) **EP 4 203 480 B1**
(45) Date de publication et mention de la délivrance du brevet: **19.08.2026**
(21) Numéro de dépôt: 22211017.3
(22) Date de dépôt: 02.12.2022
(51) Int. Cl.: H04N 21/262, H04N 21/472, H04N 21/438, H04N 21/488, H04N 21/6405

(54) **PROCÉDÉ DE GESTION DE SAUTS TEMPORELS LORS DE LA LECTURE D'UN CONTENU MULTIMÉDIA**
VERFAHREN ZUR VERWALTUNG VON ZEITSPRÜNGEN BEIM ABSPIELEN VON MEDIENINHALTEN
METHOD FOR MANAGING TIME JUMPS WHEN PLAYING A MULTIMEDIA CONTENT

(30) Priorité: 23.12.2021 FR 2114347
(43) Date de publication de la demande: 28.06.2023
(73) Titulaire: Orange, 92130 Issy-les-Moulineaux (FR)
(72) Inventeur: RIVOALEN, Mathieu, 92326 Chatillon (FR); MARCHAND, Hervé, 92326 Chatillon (FR)

(56) Documents cités:
- WO-A1-01/14986
- WO-A1-98/59493
- US-A1- 2003 037 331
- US-A1- 2005 254 785
- US-A1- 2009 241 144

## Description

### Domaine technique.

Le domaine de l'invention est celui des contenus multimédias numériques, à savoir les contenus audio et/ou vidéo numériques, également appelés contenus audiovisuels. L'invention se rapporte tout particulièrement à un procédé de gestion de sauts temporels lors de la lecture d'un contenu multimédia..

Un contenu est par exemple un contenu de télévision à la demande, un contenu de vidéo à la demande, etc. L'invention vise tout particulièrement des contenus dont la restitution empêche une navigation dans le contenu en particulier les contenus diffusés en mode multicast. Un tel contenu est par exemple un contenu « live » diffusé par une chaîne de télévision.

Un dispositif de lecture vise tous dispositifs aptes à recevoir des flux multimédias par exemple un décodeur, un téléphone mobile, une tablette, etc.

Un saut temporel réalisé lors de la lecture d'un contenu consiste à sélectionner une autre image que l'image en cours de restitution et à redémarrer la lecture à partir de cette autre image. En considérant un instant de lecture courant, si ladite autre image est située à un instant ultérieur à l'instant courant, on parlera dans ce cas d'une avance dans le contenu ; par contre si ladite autre image est située à un instant antérieur, on parlera d'un retour dans le contenu.

### Etat de la technique.

Généralement, la diffusion de contenus en direct s'appuie sur une technologie de diffusion en multidiffusion (aussi appelé diffusion « multipoint » ou « diffusion de groupe » ou encore « Multicast » par l'homme du métier). Contrairement au mode de diffusion en unicast, cette technologie permet d'économiser énormément de bande passante dans le réseau d'un opérateur qui gère la diffusion car le contenu est répliqué au plus près des dispositifs de lecture.

Cependant, un problème avec le mode de diffusion en multicast est qu'il ne permet pas de naviguer dans le contenu ; en d'autres mots, ce mode ne permet pas de réaliser des sauts temporels dans le contenu pour lire plus rapidement le contenu ou pour relire une partie du contenu. En d'autres mots, le mode multicast ne permet pas au cours d'une lecture de sélectionner une image et de redémarrer la lecture depuis cette image sélectionnée comme c'est le cas avec le mode unicast. Le document WO 98/59493 A1 (GEOVECTOR CORP [US]) 30 décembre 1998 (1998-12-30) décrit un procédé de diffusion d'un signal dans lequel plusieurs flux correspondant à différents points temporels d'un intervalle temporel mobile sont transmis, permettant des fonctions de pause, retour arrière et avance rapide par sélection progressive d'un flux correspondant à un instant différent. L'utilisateur a également la possibilité de sélectionner une position temporelle précise, conduisant à sélectionner le canal correspondant et de poursuivre la lecture à partir du canal sélectionné.

Le document US 2005/254785 A1 (NANBA YOUSUKE [JP]) 17 novembre 2005 (2005-11-17) décrit un procédé de navigation temporelle dans un contenu audiovisuel comprenant une opération de déplacement rapide dans le temps au cours de laquelle des images correspondant à des positions temporelles intermédiaires sont affichées afin de permettre à l'utilisateur d'identifier une position désirée.

L'invention offre une solution ne présentant pas les inconvénients de l'état de la technique.

### L'invention.

A cet effet, selon un premier aspect fonctionnel, l'invention a pour objet un procédé de gestion de sauts temporels lors de la lecture d'un contenu multimédia tel que défini dans la revendication 1.

Selon l'invention, plusieurs canaux de diffusion sont créés pour un même contenu avec des instants de diffusion étalés dans le temps, respectivement. Le contenu en question peut être lu via un canal de diffusion au choix. Grâce à la pluralité des canaux de diffusion d'un même contenu et à l'étalement temporel des instants de diffusion de ces canaux, une avance ou un retour dans le contenu est possible en remplaçant le canal en cours d'utilisation par un autre canal distinct. De plus, les images restituées successivement au cours d'un saut aident à se situer l'état d'avancement du saut temporel.

Grâce à l'invention, une navigation dans un contenu diffusé en multicast est possible tout comme c'est le cas pour un contenu diffusé en mode unicast. La gestion de la sélection des canaux, lors du passage d'un canal vers un autre canal, est transparente pour un utilisateur visualisant le contenu, en ce sens qu'il n'apparaît pas, lors de la navigation (avance ou retour) dans le contenu, si le contenu est diffusé en unicast ou en multicast.

Lorsqu'un contenu est reçu en unicast et qu'un saut temporel est réalisé, par exemple un retour arrière, des images sont généralement restituées successivement pour aider à visualiser l'état d'avancement du retour arrière dans le contenu. L'invention permet avec un mode de diffusion multicast d'obtenir le même résultat que celui offert par le mode de diffusion unicast en restituant, lors d'un saut temporel, des images issues des différents flux multicast relatifs au même contenu ; les images extraites des différents flux sont restituées successivement et permettent de visualiser l'état d'avancement du saut temporel.

Selon l'invention, lorsque des canaux intermédiaires s'intercalent entre le premier et le deuxième canal, les images restituées appartiennent aux canaux intermédiaires ; Selon un premier mode de réalisation, qui n'est pas l'objet de l' invention, le deuxième canal sélectionné est un canal adjacent au premier canal. Ce premier mode est utile lorsque l'espacement temporel entre instants de diffusion est relativement important par rapport à la durée de restitution du contenu, par exemple de dix minutes pour un contenu d'une heure ; dans ce cas, une entité de gestion, qui sera définie ci-après, va sélectionner un canal adjacent, à savoir soit vers le canal dont l'instant de diffusion précède l'instant de diffusion du canal sélectionné, soit vers le canal dont l'instant de diffusion est postérieur à l'instant de diffusion du canal sélectionné selon le type de navigation souhaitée à savoir une avance dans le contenu ou un retour dans le contenu.

Selon un deuxième mode de réalisation, lorsque des canaux intermédiaires s'intercalent entre le premier et le deuxième canal, les images issues de canaux intermédiaires sont restituées successivement dans le sens du saut temporel respectant un ordre chronologique. Ce deuxième mode est utile lorsque la première entité réalise des sauts entre canaux qui ne sont pas adjacents. La restitution d'images intermédiaires permet de simuler une avance rapide dans le contenu comme cela apparaît avec un flux unicast lorsque qu'une avance rapide est réalisée dans le contenu. Les sauts temporels successifs font en effet apparaître des images permettant de visualiser l'état d'avancement de la lecture accélérée du contenu .

Selon l'invention, les images restituées sont sélectionnables ; une sélection d'une image restituée déclenchant un arrêt du saut et une lecture du contenu à partir de cette image. Cette configuration, offre la possibilité de voir défiler des images représentatives d'un état d'avancement de la restitution sur différents canaux de diffusion et de sélectionner une image à partir de laquelle une reprise de la lecture est souhaitée.

Selon un troisième mode de réalisation, qui pourra être mis en œuvre alternativement ou cumulativement avec les précédents modes, lorsque la commande de saut temporel concerne une avance dans le contenu, la commande de saut temporel sur le premier canal est activée dès qu'au moins un deuxième canal diffuse le contenu à l'instant de réception de la commande de saut. Ce mode évite d'activer une commande de saut inexploitable à un instant donné.

Selon un quatrième mode de réalisation, qui pourra être mis en œuvre alternativement ou cumulativement avec les précédents modes, les canaux obtenus sont aptes à diffuser le contenu en mode multicast. Bien que l'invention soit applicable à tous types de flux, unicast ou multicast, l'invention a un intérêt particulier pour les flux diffusés en mode multicast ; en effet, comme expliqué dans la partie consacrée à l'état de la technique, le mode de diffusion en multicast ne permet pas, lorsqu'un seul canal de diffusion multicast est utilisé, de réaliser des sauts temporels lors de la lecture d'un contenu sur ce même canal. Grâce à la multidiffusion du contenu et à l'espacement temporel entre instants de diffusion, l'invention offre une possibilité de navigation tout comme dans un contenu diffusé en unicast.

Selon un premier aspect matériel, l'invention se rapporte à une entité de gestion de sauts temporels lors de la lecture d'un contenu multimédia tel que défini dans la revendication 5.

Selon un deuxième aspect matériel, l'invention se rapporte à un programme d'ordinateur apte à être mis en œuvre sur une entité telle que définie ci-dessus, le programme comprenant des instructions de code qui, lorsqu'il est exécuté par un processeur, réalise les étapes du procédé de gestion définies ci-dessus.

Enfin, selon un troisième aspect matériel, l'invention se rapporte à un support de données sur lequel a été mémorisée au moins une série d'instructions de code de programme pour l'exécution d'un procédé de gestion tel que défini en liaison avec le deuxième aspect fonctionnel.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur. D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de gestion précité.

L'invention sera mieux comprise à la lecture de la description qui suit, donnée à titre d'exemple et faite en référence aux dessins annexés sur lesquels :
[Fig. 1] La figure 1 représente un système informatique sur lequel est illustré un exemple de réalisation de l'invention.
[Fig. 2] La figure 2 est un schéma synoptique simplifié de la structure matérielle du dispositif de lecture ;
[Fig. 3] La figure 3 est un schéma synoptique simplifié de la structure matérielle du serveur ;
[Fig. 4] La figure 4 illustre plusieurs canaux de diffusion pour un même contenu avec des instants de diffusion distincts étalés dans le temps.
[Fig. 5] La figure 5 illustre un saut temporel ayant pour effet d'avancer dans le contenu.
[Fig. 6] La figure 6 illustre une barre de progression visible sur un écran à deux instants temporels montrant un état précédant le saut, et un état suivant le saut temporel.
[Fig. 7] La figure 7 illustre un saut temporel ayant pour effet un retour dans le contenu.
[Fig. 8] La figure 8 illustre un cas dans lequel la commande de saut temporel est activée ou inactivée.
[Fig. 9] La figure 9 illustre un autre cas dans lesquels la commande de saut temporel est activée ou inactivée.

Description détaillée d'un exemple de réalisation illustrant l'invention :

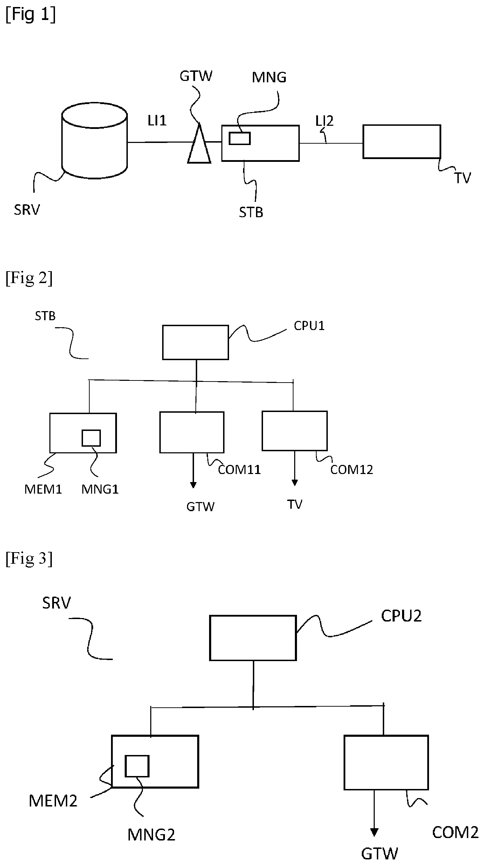

La figure 1 représente un système informatique SYS dans lequel est mis en œuvre un réseau de diffusion de contenus appelé CDN (Content Distribution Network) par l'homme du métier depuis lequel sont transmis des contenus à destination de dispositifs clients ou dispositifs de lecture de contenus.

Dans notre exemple, le système comprend un seul dispositif de lecture. Cependant l'invention s'applique à un nombre quelconque de dispositifs de lecture.

Le dispositif de lecture est par exemple un décodeur STB.

Le contenu multimédia visé ici est un contenu vidéo correspondant à une chaîne de télévision sur laquelle sont diffusés des programmes télévisés ayant une heure de début correspondant à une heure de diffusion programmée et une heure de fin.

Une fonction « lire depuis le début » est prévue pour voir un contenu depuis son début lorsque celui-ci a déjà débuté.

Le système informatique SYS comprend un dispositif de lecture de flux multimédia STB, par exemple un décodeur connecté à un terminal de restitution TV tel qu'une télévision.

Dans notre exemple, le dispositif de lecture STB est connecté sur un port du dispositif de restitution dispositif de restitution TV ; le dispositif de lecture et le dispositif de restitution dispositif de restitution TV pourrait aussi former un seul et unique dispositif.

Dans notre exemple, le dispositif de lecture STB est situé dans un réseau local LAN géré par une passerelle domestique GTW. Le contexte du réseau local est donné à titre d'exemple et pourrait être transposé aisément à un réseau Internet de type « best effort », un réseau d'entreprise, etc.

La passerelle GTW est apte à communiquer via un réseau de télécommunication LI1 tel qu'un réseau étendu WAN connu de l'homme du métier.

Le CDN est constitué de serveurs reliés en réseau dans le réseau étendu ; ces serveurs coopèrent afin de mettre des contenus multimédias à disposition des utilisateurs. Afin de simplifier l'exposé de l'invention, un seul serveur de contenus SRV sera représenté sur la figure 1 pour représenter le CDN.

Le serveur de contenus SRV se trouve, dans notre exemple, dans le réseau étendu WAN. Le serveur de contenus SRV reçoit par exemple des chaînes de contenus de télévision numérique en provenance d'un réseau de télévision diffusée (non représenté), et les met à disposition des terminaux clients, ici le dispositif de lecture STB.

Les contenus CNT sont mis à disposition dans un format donné. Un tel contenu CNT est, par exemple, un contenu téléchargé en mode de streaming adaptatif. La norme MPEG-DASH (pour l'anglais "Dynamic Adaptive Streaming over HTTP", en français « diffusion en flux adaptatif dynamique sur HTTP ») est un standard de format de diffusion audiovisuelle sur Internet ; ce standard se base sur la préparation du contenu en différentes représentations de qualité et débit variables, découpées en segments de courte durée (de l'ordre de quelques secondes), également appelés « chunks » par l'homme du métier. Chacun de ces segments est rendu disponible individuellement au moyen d'un protocole d'échange entre le terminal de restitution et le serveur fournisseur de contenus multimédias. Le protocole principalement ciblé est le protocole HTTP, mais d'autres protocoles (par exemple FTP) peuvent également être utilisés. L'organisation des segments et les paramètres associés sont publiés dans un fichier de description au format XML. Nous ne rentrerons pas plus dans les détails de ce mode de téléchargement car sans intérêt pour l'exposé de l'invention.

La figure 2 représente une architecture d'un dispositif de lecture STB. Ce dispositif STB comprend, classiquement, des mémoires MEM1 associées à un processeur CPU1. Les mémoires peuvent être de type ROM (de l'anglais « Read Only Memory ») ou RAM (de l'anglais « Random Access Memory ») ou encore Flash.

Le décodeur STB peut transmettre un contenu à restituer au dispositif de restitution TV via un module de communication COM12. Ce module COM12 est par exemple une liaison HDMI.

Le décodeur STB communique avec la passerelle via un module Ethernet pour une communication locale avec fils ou via un module radio de type WiFi pour une communication locale sans fils avec la passerelle résidentielle GTW. Le module en question est référencé CMO11 sur la figure 2.

Le décodeur STB comprend une entité de téléchargement en mode streaming (non représentée) apte à gérer le téléchargement de segments. Le décodeur STB comprend également une entité de gestion MNG1, dite première entité de gestion dans la suite, dont la fonction sera décrite ci-dessous.

En référence à la figure 3, le serveur SRV également est équipé d'au moins un processeur CPU2 et de mémoires MEM2 pour la réalisation de traitement informatique. Le serveur est également équipé d'une entité de gestion MNG2, dite deuxième entité, apte à gérer la transmission d'un contenu du serveur SRV à destination d'un ou plusieurs dispositifs de lecture. Le serveur SRV communique avec la passerelle GTW via réseau WAN pour une communiquer avec la passerelle résidentielle GTW. Le module en question est référencé CMO2 sur la figure 3.

Selon l'invention, la première entité de gestion MNG1 obtient dans un premier temps des informations relatives à des canaux de diffusion prévus pour la diffusion d'un même contenu et associés à des instants de diffusion respectifs espacés dans le temps. L'espacement temporel entre instants de diffusion associés aux différents canaux peuvent être réguliers ou irréguliers.

Suite à l'obtention, au cours d'une restitution du contenu via un canal, dit premier canal, une réception d'une commande de saut temporel à réaliser dans le contenu déclenche dans un premier temps une étape de sélection d'un canal de diffusion, dit deuxième canal, distinct du premier canal de diffusion; et dans un second temps une étape de réception du contenu multimédia depuis le deuxième canal et de restitution du contenu reçu.

On verra ci-dessous que les multiples canaux de diffusion sont créés par la deuxième entité de gestion MNG2.

Bien qu'applicable à tous types de flux, l'invention s'applique idéalement aux flux diffusés en multicast. Dans la suite de la description, les canaux de diffusion diffusent des flux multimédias en mode multicast.

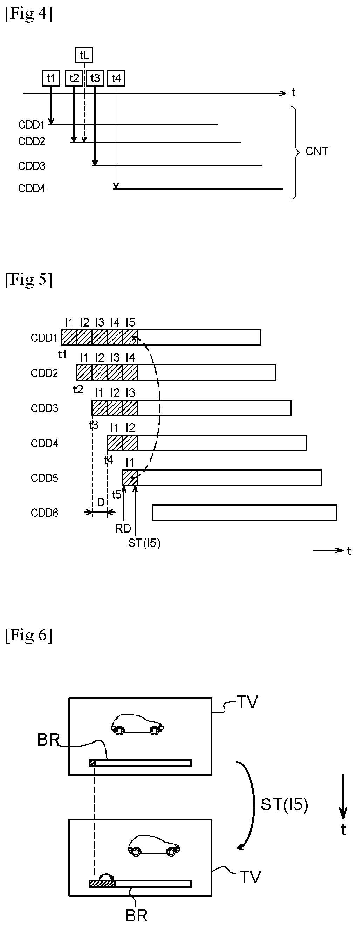

Dans notre exemple, en référence à la figure 4, un premier canal de diffusion CDD1 est prévu pour la diffusion d'un contenu télévisé « en live » c'est-à-dire sans retard par rapport à l'instant de diffusion programmé par la chaîne de télévision concernée. Le premier canal CDD1 et l'instant de diffusion associé I1 est celui prévu par défaut dans un plan de service d'un fournisseur de contenus. Cet instant I1 (l'heure de diffusion) est généralement visible via un guide programme dans lequel apparaît l'ensemble des contenus télévisés et les heures de diffusion respectives. Le guide de programme est généralement accessible sur demande et afficher par le biais d'une interface graphique.

La figure 4 illustre quatre canaux CDD1-CDD4 alloués à la restitution d'un même programme télévisé.

Prenons un exemple d'un match de Foot dont la diffusion officielle est programmée un samedi soir à 20h00 (t1=20h00) sur plusieurs canaux de diffusion CDD1-CDD4 sont prévus et étalés dans le temps avec des intervalles de quelques minutes, par exemple 10 minutes.

Le canal CDD1 est, dans notre exemple, le canal principal à savoir le canal qui diffuse le contenu à l'instant programmé sans retard « en live ». Les autres canaux diffusent le même contenu avec du retard par rapport au canal principal. Les différents canaux vont permettre la diffusion en multicast du match à des instants différents t1-t4 successivement, par exemple espacés régulièrement d'une durée de 10 minutes.

Les canaux CDD1-CDD4 sont compris dans le plan de service ; le plan de service indique par exemple que le match sera transmis à 20h00 et que d'autres transmissions en multicast vont aussi avoir lieu toutes les dix minutes à savoir 20h10 (sur le canal CDD2), 20h20 (sur le canal CDD3), 20h30 sur le canal CDD4), etc.

Le décodeur STB reçoit ensuite une demande d'accès au contenu CNT. La demande d'accès peut provenir d'une commande d'accès issue d'une télécommande apte à télécommander le décodeur STB.

Supposons qu'une demande d'accès au contenu est reçue à 20h11 (tL=20h11). La première entité MNG1 reçoit cette demande et gère, dans le cas où plusieurs canaux diffusent le contenu à l'instant de réception de la requête d'accès, la sélection du canal qui sera le plus approprié pour la réception du contenu. En d'autres mots, en fonction de l'instant de réception de la demande d'accès tL au contenu, la première entité de gestion MNG1 va sélectionner un canal parmi les canaux disponibles et requérir une réception du contenu via ce canal.

Selon une première variante, le canal sélectionné est le canal dont l'instant de diffusion précède l'instant de réception de la demande d'accès tL. Dans notre cas, l'instant de diffusion qui précède la demande d'accès tL est le dernier en date à savoir t2 (20h10). Cette variante a l'avantage d'accéder au contenu sans délai car le contenu est déjà en cours de diffusion.

Selon une deuxième variante, le canal sélectionné est celui dont l'instant de diffusion est à venir ; cet instant est postérieur à l'instant de réception de la demande d'accès tL ; le contenu n'est pas encore diffusé sur ce canal. Par exemple, le canal choisit est le canal dont l'instant prévu de diffusion suit l'instant tL de réception de la demande d'accès. Dans notre exemple, le canal sélectionné est donc le troisième canal de diffusion CDD3 dont l'instant de diffusion est prévu à t3 (20h20) soit quelques minutes après l'instant t2. Dans ce cas, le serveur n'a pas commencé à transmettre le contenu. Il y a donc une période d'attente avant de recevoir le contenu ; en contrepartie, le contenu est restitué depuis le début. La période d'attente visée ci-dessus peut faire l'objet d'une transmission d'une notification pour informer du délai d'attente avant diffusion du contenu. A noter que plus l'espacement entre instants de diffusion est court, moins long sera l'attente de réception du contenu.

L'exemple ci-dessus se base sur quatre canaux. Le nombre peut bien évidemment être inférieur ou supérieur comme on le verra ci-dessous dans d'autres modes de réalisation. D'une manière générale, la deuxième entité MNG2 peut créer un nombre « n » de canaux CDD1-CDDn associés à des instants de diffusion respectifs t1 à tn étalés dans le temps. Le nombre « n » de canaux créés peut varier selon le type de contenu et/ou de la durée du contenu. Par exemple, si le contenu est un contenu à forte audience et donc susceptible d'être très demandé, un court espacement, par exemple deux secondes, peut être pertinent entre chaque instant de diffusion. On comprendra aisément que pour un même espacement temporel, plus la longueur en temps du contenu est importante, plus le nombre de canaux de diffusion est grand.

Comme expliqué ci-dessus, toutes les chaînes de télévision et canaux de diffusion sont créés et déclarés dans un document appelé plan de service live.

Suite au démarrage de la diffusion d'un contenu sur un premier canal CDD1, à des instants donnés, par exemple toutes les N minutes (2 minutes par exemple), un nouveau canal multicast est créé pour diffuser le contenu depuis son début.

Précisons ici qu'une création de canal de diffusion peut consister en une instanciation d'un canal. Rappelons que le plan de service regroupe toutes les chaînes de télévision accessibles et d'autres contenus tels que des contenus de vidéo à la demande ou équivalents. Le plan de service comprend en outre, conformément à l'invention, pour un programme télévisé en cours de diffusion, des données relatives aux canaux multicast et l'espacement temporel entre les instants de diffusion sur ces canaux. De cette manière, la première entité de gestion MNG1 a connaissance à la fois des canaux existants en cours de diffusion du contenu et des canaux dont la création est à venir.

Selon l'invention, après création des canaux de diffusion, la première entité de gestion MNG1 installée dans le dispositif de lecture décodeur STB va accéder aux informations relatives au plan de service fournies par le serveur SRV. Grâce à ces informations, la première entité MNG1 peut, dans un premier temps, sélectionner un canal pour la réception du contenu, et ensuite, lors d'une éventuelle réception d'une commande de saut temporel lors de la lecture, accéder aux autres canaux distincts du canal courant de manière à lire le contenu depuis un autre canal à la place du canal courant. Du fait du décalage temporel entre instants de diffusion sur les différents canaux, un changement de canal a pour effet la réalisation d'un saut temporel dans le contenu.

Considérons par exemple un canal courant CDDn en cours d'utilisation et ayant un instant de diffusion tn et un canal CDD(k<n) ayant un instant de diffusion tk différent de tn. Supposons que le canal CDD(k) est le canal sélectionné pour la réception du contenu ; Dans cette configuration, lors de la réception d'une commande de navigatio dans le contenu, la première entité de gestion MNG1 arrête la lecture via le canal CDDn, sélectionne ensuite le canal CDD(k) et lit le contenu via ce canal CDD(k). Du fait de l'écart temporel séparant les instants de diffusion tn et tk, on comprend qu'un saut temporel de X (X est une valeur numérique) minutes a été réalisé dans le contenu.

A noter qu'un saut peut concerner à la fois une avance ou un retour dans le contenu.
Si tk < tn, le saut aura pour effet d'avancer dans le contenu ;
Si tk> tn, le saut aura pour effet de reculer dans le contenu.

Aussi, plusieurs changements de canaux successifs peuvent être réalisés consécutivement.

Un mode de réalisation va être décrit en référence à la figure 5 illustrant un saut temporel, de type avance dans le contenu, réalisé lors de la lecture du contenu depuis un canal source vers un canal cible. Dans ce mode, le nombre de canaux CDD1-CDD6 est réduit à six pour simplifier l'exposé ; cependant on comprendra aisément qu'un nombre plus important est évidemment envisageable. Par exemple, pour une émission télévisée d'une heure avec des espacements temporels D de deux minutes (2 mn), trente canaux de diffusion en multicast peuvent être créés.

Prenons un exemple d'un film diffusé sur une chaîne de télévision par exemple TF1 à un instant t1= 21H00 et dont la rediffusion est prévue sur d'autres canaux toutes les deux minutes à savoir aux instants t2= 21h02, puis à t3= 21h04, ... pendant toute la durée du film.

Supposons que l'utilisateur souhaite accéder au contenu à 21h08. Dans cette configuration, le contenu est en cours de restitution sur le canal CDD1 depuis huit minutes, sur le canal CDD2 depuis six minutes, sur le canal CDD3 depuis quatre minutes, sur le canal CDD4 depuis deux minutes. La diffusion du même contenu va démarrer sur le canal CDD5.

Dans notre exemple, l'utilisateur active une fonction « reprise depuis le début » signifiant qu'une lecture du contenu depuis son début est souhaitée. La première entité MNG1 sélectionne un canal de diffusion, par exemple le canal CDD5 qui démarre la diffusion à l'instant t5=21h08 c'est-à-dire juste au moment de la réception de la requête d'accès par la première entité MNG1. Ce choix permet à l'utilisateur de visionner le contenu depuis son début.

A ce stade, le contenu est reçu par le dispositif de lecture via le canal CDD5.

Un changement de canal d'un canal source vers un canal cible va être réalisé. Le changement a pour effet une sélection une restitution du contenu à partir d'une nouvelle image de départ ; un saut temporel est donc réalisé dans le contenu.

Un changement de canal peut être une sélection d'un canal adjacent à la place du canal courant. Supposons que l'utilisateur requiert, lors de la restitution depuis le canal CDD5, un saut en avant dans le contenu. La première entité MNG1 sélectionne le canal adjacent CDD4 et restitue l'image diffusée par le canal CDD4 ; ainsi de suite, l'utilisateur peut requérir un saut en avant, l'entité de gestion MNG1 sélectionne le canal adjacent correspondant et requiert la restitution du contenu via le canal CDD3. Un changement de canal ne vise pas forcément des canaux adjacents. Dans ce cas, plusieurs canaux s'intercalent entre le canal source et le canal cible. Dans notre exemple, l'utilisateur requiert un saut temporel ST(I5) du canal courant CDD5 vers le canal cible CDD1 diffusant l'image I5.

Le changement peut être réalisé en arrêtant la restitution via le canal source et en reprenant la restitution via le canal cible CDD1, de préférence sans délai d'attente de manière à assurer une continuité de restitution. La continuité assure une restitution continue du contenu bien qu'ayant fait l'objet d'un changement de canal.

Selon une variante, lorsque plusieurs canaux intermédiaires s'intercalent entre le canal source et le canal cible, au cours d'un saut, les images diffusées sur des canaux de diffusion appartenant aux canaux intermédiaires, ici les canaux CDD2,CDD3,CDD4, sont restituées. Les images sont, de préférence, restituées successivement dans le sens du saut de manière à déduire l'état d'avancement du saut dans le contenu considéré. Suite aux différentes restitutions, la lecture peut reprendre via le deuxième canal.

Selon l'invention, les images restituées sont sélectionnables ; une sélection d'une image restituée au cours d'un saut déclenche alors un arrêt du saut et une reprise de la lecture du contenu à partir de l'image sélectionnée.

La figure 6 illustre l'évolution de la restitution sur l'écran résultant du saut temporel ST(I5) résultant du changement de canal, à savoir la lecture de l'image I5 suite à la lecture de l'image I1. Le saut réalisé est transparent pour un utilisateur visionnant le contenu ; pour l'utilisateur les images restituées l'une à la suite de l'autre à savoir I5 puis I1 semblent provenir du même canal de diffusion.

Selon la variante décrite ci-dessus, les images I2, I3, I4 peuvent aussi être restituées successivement lors du saut pour avoir une idée de l'état d'avancement du saut.

Selon l'invention, les images I2 à I4 sont sélectionnables. Supposons que l'image I3 est sélectionnée lors de sa restitution au cours du saut ; dans ce cas, la sélection entraîne un arrêt du saut et une poursuite de la lecture à partir de cette image sélectionnée I3.

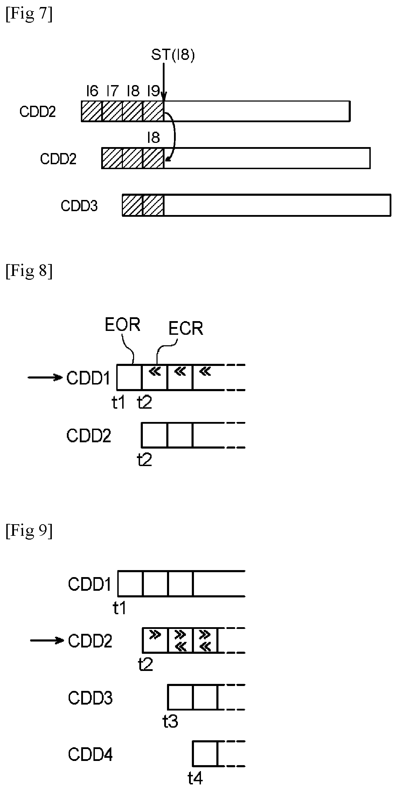

Un saut temporel de type retour dans le contenu est maintenant décrit en référence à la figure 7.
supposons qu'à 21h18, l'image I9 étant en cours de restitution via le cana CDD1, l'utilisateur requiert un retour en arrière dans le contenu avec son dispositif de commande en réalisant un saut temporel ST(I8). Ce retour temporel peut arriver lorsque l'utilisateur souhaite revenir sur une partie du contenu, par exemple une scène particulière d'un film.

A réception de la commande de saut ST(I8), la première entité MNG1 arrête la lecture du contenu via le canal CDD1 et requiert un accès au contenu via le canal adjacent CDD2. L'utilisateur peut requérir d'autres sauts d'une unité jusqu'au canal souhaité.

Dans notre exemple, la sélection du saut souhaité est réalisée via deux commandes, à avoir une commande qui permet une avance dans le contenu par exemple associée au symbole « >> » et une commande de retour dans le contenu associée au symbole « << ».

Une interface permet la sélection de l'une des deux commandes. Cette interface peut correspondre à des boutons physiques ou à des commandes tactiles, vocales ou tout autres commandes similaires.

Dans notre exemple, les commandes sont manipulables sur un écran. L'une ou l'autre des commandes peuvent être inopérantes dans certains cas comme cela est expliqué ci-dessous ; si le cas se présente, la commande concernée est inactivée.

L'inactivation consiste par exemple à rendre la commande inaccessible ; par exemple la commande n'est pas affichée sur l'écran.

Deux cas dans lesquels une commande est inactivée sont présentés en référence aux figure 8 et 9. Sur ces deux figures, un canal est sélectionné, le canal CDD1 sur la figure 8 et le canal CDD2 sur la figure 9. Sur ces figures, une flèche accolée aux références CDD1 et CDD2 signifient que ces canaux ont été sélectionnés par la première entité ENT1 pour la restitution du contenu..

Sur ces deux figures apparaissent les commandes avance ou retour lorsqu'elles sont actives en fonction des instants de diffusion des autres canaux de diffusion.

Dans notre exemple, la commande d'avance rapide « >> » sera active en liaison avec un canal sélectionné uniquement s'il existe un autre canal déjà en cours de diffusion du même contenu ; Par exemple, sur la figure 8, le canal CDD1 est sélectionné ; il n'y a pas de canal ayant un instant de diffusion antérieur et qui soit en cours de diffusion ; dans ce cas, la commande est inactive.

Dans notre exemple, la commande de retour rapide sera active en liaison avec un canal sélectionné que si une nouvelle instance de canal devient accessible avec un retard supplémentaire (2 minutes dans notre exemple) par rapport au canal sélectionné CDD1. En référence à la figure 8, à l'instant t2, le canal CDD2 diffuse le contenu ; la commande de retour « << » est alors activée jusqu'à ce qu'un canal adjacent diffuse de nouveau le contenu.

La figure 9 illustre le cas où le deuxième canal CDD2 est sélectionné. De l'instant t2 à t3, seul un canal est en cours de diffusion à savoir le canal CDD1, la commande avance « >> » est donc active pendant toute la lecture. La commande retour « << » est inactive car le contenu n'est pas encore en cours de diffusion sur le canal CDD3.

Le canal CDD3 diffuse le contenu à l'instant t3. A partir de cet instant t3, les commandes de retour « << » et d'avance « >> » deviennent actives.

Précisons enfin que la première entité de gestion MNG1 est équipée d'un processeur configuré pour réaliser les étapes suivantes,
au cours d'une restitution du contenu via un canal, dit premier canal, une réception d'une commande de saut temporel dans le contenu entraîne
une étape de sélection d'un canal de diffusion, dit deuxième canal, distinct du premier canal de diffusion;
une étape de réception du contenu multimédia depuis le deuxième canal et de restitution du contenu reçu.

Précisons aussi ici que le terme module ou le terme entité peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

## Revendications

1. Procédé de gestion de sauts temporels lors de la lecture d'un contenu multimédia reçu par un dispositif de lecture via un réseau de communication, le procédé comprenant une étape d'obtention d'une pluralité de canaux de diffusion (CDD1-CDD6) pour un même contenu, les instants de diffusion (I1-I5) respectifs étant espacés temporellement, **caractérisé en ce qu'**au cours d'une restitution du contenu (CNT) via un canal (CDD5), dit premier canal, une réception d'une commande de saut temporel ST(I5) dans le contenu (CNT) entraîne
une étape de sélection d'un canal de diffusion (CDD1), dit deuxième canal, distinct du premier canal de diffusion;
au cours d'un saut vers le deuxième canal, lorsque des canaux intermédiaires s'intercalent entre le premier et le deuxième canal, une étape de restitution d'images diffusées sur des canaux de diffusion intermédiaires appartenant à ladite pluralité canaux de diffusion, les images restituées étant sélectionnables, une sélection d'une image restituée déclenchant un arrêt du saut et une lecture du contenu à partir de cette image.

2. Procédé de gestion selon la revendication 1, **caractérisé en ce que** les images issues des canaux intermédiaires sont restituées successivement, les canaux intermédiaires étant sélectionnés dans l'ordre chronologique du saut.

3. Procédé de gestion selon la revendication 1, **caractérisé en ce que**, lorsque la commande de saut temporel concerne une avance dans le contenu, la commande de saut temporel sur le premier canal (CDD5) est activée dès qu'au moins un deuxième canal diffuse le contenu à l'instant de réception de la commande de saut.

4. Procédé de gestion selon la revendication 1, **caractérisé en ce que** les canaux obtenus sont aptes à diffuser le contenu en mode multicast.

5. Entité de gestion (MNG1) de sauts temporels lors de la lecture d'un contenu multimédia reçu par un dispositif de lecture via un réseau de communication, l'entité comprenant un module d'obtention d'une pluralité de canaux de diffusion pour un même contenu, les instants de diffusion respectifs étant espacés temporellement, **caractérisé en ce que** l'entité comprend un processeur configuré pour réaliser les étapes suivantes,
au cours d'une restitution du contenu via un canal, dit premier canal, une réception d'une commande de saut temporel dans le contenu entraîne une étape de sélection d'un canal de diffusion, dit deuxième canal, distinct du premier canal de diffusion;
au cours d'un saut vers le deuxième canal, lorsque des canaux intermédiaires s'intercalent entre le premier et le deuxième canal, une étape de restitution d'images diffusées sur des canaux de diffusion intermédiaires appartenant à ladite pluralité canaux de diffusion, les images restituées étant sélectionnables, une sélection d'une image restituée déclenchant un arrêt du saut et une lecture du contenu à partir de cette image..

6. Programme d'ordinateur apte à être mis en œuvre sur une entité de gestion (MNG1) telle que définie dans la revendication 5, le programme comprenant des instructions de code qui, lorsqu'il est exécuté par un processeur, réalise les étapes du procédé définies dans la revendication 1.

7. Support de données sur lequel a été mémorisée au moins une série d'instructions de code de programme pour l'exécution d'un procédé de gestion tel que défini dans la revendication 1.

## Patentansprüche

1. Verfahren zur Verwaltung von Zeitsprüngen beim Abspielen eines Multimedia-Inhalts, der von einer Abspielvorrichtung über ein Kommunikationsnetzwerk empfangen wird, wobei das Verfahren einen Schritt zum Erhalten einer Vielzahl von Übertragungskanälen (CDD1-CDD6) für denselben Inhalt aufweist, wobei die jeweiligen Übertragungszeitpunkte (I1-I5) zeitlich voneinander beabstandet sind, **dadurch gekennzeichnet, dass** während einer Wiedergabe des Inhalts (CNT) über einen Kanal (CDD5), den sogenannten ersten Kanal, der Empfang eines Zeitsprungbefehls ST(I5) im Inhalt (CNT) zu
einem Schritt zum Auswählen eines Übertragungskanals (CDD1) führt, des sogenannten zweiten Kanals, der sich vom ersten Übertragungskanal unterscheidet;
während eines Sprungs zum zweiten Kanal, wenn sich Zwischenkanäle zwischen dem ersten und dem zweiten Kanal befinden, ein Schritt zum Wiedergeben von Bildern, die auf Zwischenkanälen übertragen werden, die zu der Vielzahl von Übertragungskanälen gehören, die wiedergegebenen Bilder auswählbar sind und die Auswahl eines wiedergegebenen Bildes einen Stopp des Sprungs sowie die Wiedergabe des Inhalts ab diesem Bild auslöst.

2. Verfahren zur Verwaltung nach Anspruch 1, **dadurch gekennzeichnet, dass** die aus den Zwischenkanälen stammenden Bilder nacheinander wiedergegeben werden, wobei die Zwischenkanäle in der chronologischen Reihenfolge des Sprungs ausgewählt werden.

3. Verfahren zur Verwaltung nach Anspruch 1, **dadurch gekennzeichnet, dass**, wenn der Zeitsprungbefehl einen Vorlauf im Inhalt betrifft, der Zeitsprungbefehl auf dem ersten Kanal (CDD5) aktiviert wird, sobald mindestens ein zweiter Kanal den Inhalt zum Zeitpunkt des Empfangs des Zeitsprungbefehls überträgt.

4. Verfahren zur Verwaltung nach Anspruch 1, **dadurch gekennzeichnet, dass** die erhaltenen Kanäle dazu geeignet sind, den Inhalt im Multicast-Modus zu übertragen.

5. Einheit (MNG1) zur Verwaltung von Zeitsprüngen beim Abspielen eines Multimedia-Inhalts, der von einer Abspielvorrichtung über ein Kommunikationsnetzwerk empfangen wird, wobei die Einheit ein Modul zum Erhalten einer Vielzahl von Übertragungskanälen für denselben Inhalt aufweist, wobei die jeweiligen Übertragungszeitpunkte zeitlich voneinander beabstandet sind, **dadurch gekennzeichnet, dass** die Einheit einen Prozessor aufweist, der so konfiguriert ist, dass er die folgenden Schritte ausführt:
während einer Wiedergabe des Inhalts über einen Kanal, den sogenannten ersten Kanal, führt das Empfangen eines Zeitsprungbefehls in dem Inhalt zu einem Schritt zum Auswählen eines Übertragungskanals, des sogenannten zweiten Kanals, der sich vom ersten Übertragungskanal unterscheidet;
während eines Sprungs zum zweiten Kanal, wenn sich Zwischenkanäle zwischen dem ersten und dem zweiten Kanal befinden, ein Schritt zum Wiedergeben von Bildern, die auf Zwischenkanälen übertragen werden, die zu der Vielzahl von Übertragungskanälen gehören, die wiedergegebenen Bilder auswählbar sind und die Auswahl eines wiedergegebenen Bildes einen Stopp des Sprungs sowie die Wiedergabe des Inhalts ab diesem Bild auslöst.

6. Computerprogramm, das geeignet ist, auf einer Verwaltungseinheit (MNG1) wie in Anspruch 5 definiert eingesetzt zu werden, wobei das Programm Codeanweisungen enthält, die bei seiner Ausführung durch einen Prozessor die in Anspruch 1 definierten Schritte des Verfahrens ausführen.

7. Datenträger, auf dem mindestens ein Satz von Programmcodebefehlen zur Durchführung eines Verfahrens nach Anspruch 1 gespeichert ist.

## Claims

1. Method for managing time hops when playing back a multimedia content item received by a playback device via a communication network, the method comprising a step of obtaining a plurality of broadcast channels (CDD1-CDD6) for the same content item, the respective broadcast times (I1-I5) being spaced in time, **characterized in that**, during rendering of the content item (CNT) via a channel (CDD5), called a first channel, receipt of a time hop command ST(I5) for a time hop in the content item (CNT) brings about
a step of selecting a broadcast channel (CDD1), called a second channel, which is different from the first broadcast channel;
during a hop to the second channel, when intermediate channels are interposed between the first channel and the second channel, a step of rendering images broadcast on intermediate broadcast channels belonging to said plurality of broadcast channels, the rendered images being selectable, selection of a rendered image triggering stopping of the hop and playback of the content item starting from this image.

2. Management method according to Claim 1, **characterized in that** the images coming from the intermediate channels are rendered successively, the intermediate channels being selected in chronological order of the hop.

3. Management method according to Claim 1, **characterized in that**, when the time hop command relates to fast-forwarding in the content item, the time hop command on the first channel (CDD5) is activated as soon as at least one second channel broadcasts the content item at the time of receipt of the hop command.

4. Management method according to Claim 1, **characterized in that** the channels which are obtained are able to broadcast the content item in multicast mode.

5. Management entity (MNG1) for managing time hops when playing back a multimedia content item received by a playback device via a communication network, the entity comprising a module for obtaining a plurality of broadcast channels for the same content item, the respective broadcast times being spaced in time, **characterized in that** the entity comprises a processor configured to perform the following steps,
during rendering of the content item via a channel, called a first channel, receipt of a time hop command for a time hop in the content item brings about a step of selecting a broadcast channel, called a second channel, which is different from the first broadcast channel;
during a hop to the second channel, when intermediate channels are interposed between the first channel and the second channel, a step of rendering images broadcast on intermediate broadcast channels belonging to said plurality of broadcast channels, the rendered images being selectable, selection of a rendered image triggering stopping of the hop and playback of the content item starting from this image.

6. Computer program which is able to be implemented on a management entity (MNG1) as defined in Claim 5, the program comprising code instructions which, when it is executed by a processor, performs the steps of the method which are defined in Claim 1.

7. Data medium on which at least one series of program code instructions for executing a management method as defined in Claim 1 has been stored.
